# EUROPÄISCHE PATENTSCHRIFT

(11) **EP 1 857 263 B1**
(45) Veröffentlichungstag und Bekanntmachung des Hinweises auf die Patenterteilung: **13.04.2011**
(21) Anmeldenummer: 07009108.7
(22) Anmeldetag: 05.05.2007
(51) Int. Cl.: B29D 30/52, B29D 30/56, B60C 11/02

(54) **Verfahren zur Runderneuerung von EM-Reifen sowie hierfür geeigneter Laufstreifen und hiermit runderneuerter EM-Reifen**
Method for retreading EM-tyres and suitable run strips therefor and EM-tyres with completely new retread
Procédé destiné au recaoutchoutage de pneus EM tout comme bande de roulement adaptée et pneu EM recaoutchouté avec ce procédé

(30) Priorität: 17.05.2006 DE 102006023005
(43) Veröffentlichungstag der Anmeldung: 21.11.2007
(73) Patentinhaber: Reifen-Ihle GmbH, 89302 Günzburg (DE)
(72) Erfinder: Reif, Wolfgang, 89312 Günzburg (DE); Kraft, Erich, 89312 Günzburg (DE)
(74) Vertreter: Munk, Ludwig

(56) Entgegenhaltungen:
- EP-A- 0 464 660
- DE-A1- 2 503 973
- DE-A1- 2 642 990
- DE-A1- 4 109 984
- US-A- 4 088 521
- US-A- 5 104 600
- US-B1- 6 190 479

## Beschreibung

Die Erfindung betrifft gemäß einem ersten Erfindungsgedanken ein Verfahren zur Runderneuerung von EM-Reifen, wobei ein alter Laufbelag entfernt und auf die so vorbereitete Karkasse ein neuer Laufbelag in Form eines vorgefertigten, einteiligen Laufstreifens aufvulkanisiert wird, der Stück für Stück in einer ein derartiges Stück enthaltenden, aus Unterteil und Oberteil bestehenden Form hergestellt wird, wobei die auf das erste Stück folgenden Stücke an das jeweils vorhergehende Stück direkt anvulkanisiert werden.

Die Erfindung betrifft ferner einen hierfür geeigneten Laufstreifen sowie einen hiermit rundemeuerten EM-Reifen.

Ein Verfahren zur Runderneuerung von LKW-Reifen, bei dem ein an die Außenkontur der Karkasse, einteiliger Laufstreifen verwendet wird, ist aus der EP 0 464 660 A1 bekannt. Ein weiteres Verfahren zur Runderneuerung von Reifen ist im der US 5,104,600 offenbart.

Ein Verfahren zur Runderneuerung eines EM-Reifens eingangs erwähnter Art, ein hierfür geeigneter Laufstreifen sowie ein hiermit runderneuerter EM-Reifen sind aus der DE 41 09 984 A1 bekannt. Die Verwendung eines einteiligen Laufstreifens anstelle mehrerer Einzelsegmente hat die Runderneuerung von EM-Reifen etc. entscheidend verbessert. Bisher wird der einteilige Laufstreifen jedoch als in der Länge und Breite ebener, das heißt einen ebenen, ungekrümmten Querschnitt aufweisender Streifen hergestellt. Es ist daher erforderlich, im Bereich der seitlichen Ränder des Umfanges der Karkasse seitliche Schulteraufbauten anzubringen, bevor der ebene Laufstreifen aufgebracht werden kann. Dies erfordert nicht nur einen hohen Aufwand und ist daher unerwünscht. Es kommt auch hinzu, dass die Schulteraufbauten, die aus Rohgummi aufgebaut werden, vergleichsweise dick sind, so dass sich lange Vulkanisationszeiten ergeben. Außerdem stellen die Schulteraufbauten Schwachstellen des runderneuerten Reifens dar. Ein weiterer Nachteil des genannten Standes der Technik ist darin zu sehen, dass hier die schräg zur Achse verlaufenden Profilstollen des Laufstreifens beim Aufbringen des Laufstreifens auf die Karkasse gebogen werden müssen. Der hohe Biegewiderstand der vergleichsweise dicken Stollen verhindert dabei eine exakte Rundheit, sondern lässt praktisch ein Vieleck entstehen. Dieser Nachteil wird noch verstärkt, wenn die Schulteraufbauten nicht hoch genug sind, so dass es zu Torsionsspannungen innerhalb der Stollen kommen kann. In jedem Fall sind innerhalb der Stollen vergleichsweise hohe innere Spannungen zu befürchten, was zu einem schnellen Profilabrieb führen kann.

Hiervon ausgehend ist es daher die Aufgabe der vorliegenden Erfindung, ein Verfahren eingangs erwähnter Art sowie einen hiernach runderneuerten EM-Reifen und einen hierfür geeigneten Laufstreifen unter Beibehaltung der grundsätzlichen Vorteile und Vermeidung der oben geschilderten Nachteile mit einfachen und kostengünstigen Mitteln so zu verbessern, dass eine lange Standzeit des Reifens erreicht wird.

Die auf das Verfahren sich beziehende Aufgabe wird in Verbindung mit dem gattungsgemäßen Verfahren dadurch gelöst, dass zur Herstellung des Laufstreifens eine Form mit einem einem Stück des Stück für Stück hergestellten Laufstreifens entsprechenden, über der Breite und der Länge so gekrümmten Hohlraum Verwendung findet, dass der Laufstreifen als an lediglich einer Stelle offener Torus mit in Umfangsrichtung und Achsrichtung gekrümmter, an die Außenkontur der Karkasse angepasster Innenkontur hergestellt wird und dass der so hergestellte Laufstreifen unter Zwischenschaltung einer auf ihrer ganzen Fläche eine im Wesentlichen gleiche Dicke aufweisenden Bindegummischicht auf die schulteraufbaufrei bleibende Karkasse aufgebracht wird.

Die in Umfangs- und Achsrichtung, d.h. dreidimensiional gekrümmte Innenkontur des erfindungsgemäßen Laufstreifens ergibt einen passenden, kappenförmigen Sitz des Laufstreifens. Luftblasen werden vermieden und Schulteraufbauten sind in vorteilhafter Weise entbehrlich. Dennoch stellen die erfindungsgemäßen Maßnahmen sicher, dass der Laufstreifen beim Auflegen auf die Karkasse spannungsfrei bleibt. Der Laufstreifen kann daher aufgerollt werden. Ein Anklopfen wie früher ist in vorteilhafter Weise nicht mehr erforderlich. Ein erfindungsgemäß rundemeuerter EM-Reifen besitzt in vorteilhafter Weise eine hohe Rundlaufgenauigkeit sowie infolge fehlender innerer Spannungen auch eine besonders hohe Schnittunempfindlichkeit und unterliegt einem geringen Profilabrieb. Insgesamt sind daher eine hohe Lebensdauer und damit eine hohe Gesamtwirtschaftlichkeit zu erwarten.

Da seitliche Schulteraufbauten entfallen kann der Laufstreifen in vorteilhafter Weise auch eine einem Neureifen entsprechende Außenkontur aufweisen. Kompromisse bei der Außenkontur sind daher nicht erforderlich.

Eine weitere vorteilhafte Maßnahme kann darin bestehen, dass der Laufstreifen biegeschlaff hergestellt wird. Dies ermöglicht ein einfaches Aufbringen des Laufstreifens und gewährleistet eine satte Anlage an der Karkasse.

In weiterer Fortbildung der übergeordneten Maßnahmen kann der Laufstreifen auf die Karkasse aufgewickelt und mittels einer einen an die konvexe Außenkontur des Laufstreifens angepassten, konkaven Querschnitt aufweisenden Walze an die Karkasse angedrückt werden. Diese Maßnahmen ergeben eine rationelle Arbeitsweise sowie eine gute Anlage des Laufstreifens an der Karkasse.

Vorteilhaft kann der Laufstreifen zur Vulkanisation mittels umlaufender Gute oder Spanringe an die Karkasse angepresst werden. Dies gewährleistet in vorteilhafter Weise trotz der torusförmigen Innenkontur des Laufstreifens eine zuverlässige, blasenfreie Anlage an der Karkasse.

Weitere zweckmäßige Ausgestaltungen und vorteilhafte Weiterbildungen der übergeordneten Maßnahmen sowie die auf die weiteren Aufgaben sich beziehenden Lösungen ergeben sich aus der nachstehenden Beispielsbeschreibung anhand der Zeichnung in Verbindung mit den restlichen Unter- und Nebenansprüchen.

In der nachstehend beschriebenen Zeichnung zeigen:
- Figur 1: einen Radialschnitt durch einen EM-Reifen mit angewalztem Lauf- streifen,
- Figur 2: eine schematische Darstellung einer Presse zur Herstellung des ein- teiligen Laufstreifens,
- Figur 3: einen Querschnitt durch die Formelemente der Presse und
- Figur 4: einen Längsschnitt durch die Formelemente der Presse und
- Figur 5: die Anordnung gemäß Figur 1 mit angelegten Spannringen bzw.
Spanngurten.

Die Erfindung bezieht sich auf Reifen von Erdbewegungsmaschinen, die im Neuzustand vergleichsweise teuer sind und bei denen mittels einer Runderneuerung die Lebensdauer verlängert und damit eine gute Wirtschaftlichkeit erreicht werden kann.

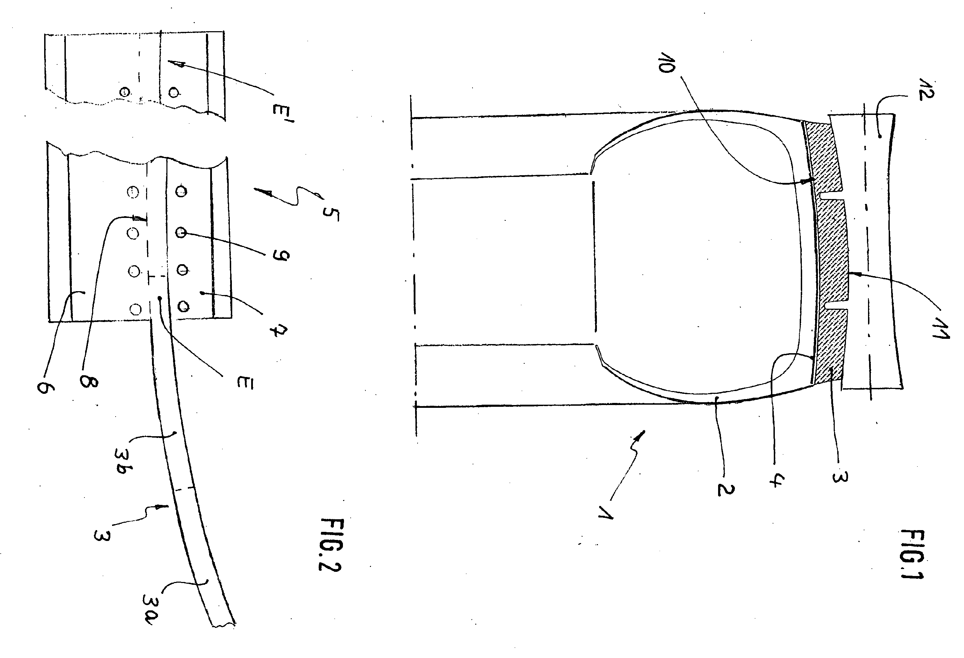

Der in Figur 1 angedeutete EM-Reifen 1 enthält eine mit nicht näher dargestellten Tragelementen in Form einvulkanisierter Textil- und/oder Metallelemente versehene, tragende Karkasse 2, die im Bereich der Seitenwände mit hier nicht näher dargestellten Seitenbelägen und umfangsseitig mit einem außen profilierten Laufstreifen 3 versehen ist. Bei der umfangsseitigen Runderneuerung wird ein alter Laufstreifen entfernt und auf die so freigelegte Karkasse 2 ein neuer Laufstreifen 3 aufvulkanisiert. Der alte Laufstreifen kann durch Abfräsen, Abraspeln, Abschleifen etc. entfernt werden. Der neue Laufstreifen 3 wird unter Verwendung einer aus Rohgummi bestehenden, dünnen Bindegummischicht 4 auf den Außenumfang der freigelegten Karkasse 2 aufvulkanisiert.

Der neue Laufstreifen 3 wird, wie in Figur 2 angedeutet ist, als einteiliger Vulkanisationsformling hergestellt. Dabei findet eine Vulkanisationspresse 5 Verwendung, die aus einem Unterteil 6 und einem Oberteil 7 besteht und einen vom Unterteil 6 und Oberteil 7 begrenzten Formraum 8 enthält, der durch gegenseitige Relativbewegung von Unterteil 6 und Oberteil 7 geöffnet und geschlossen werden kann. Der Formraum 8 wird im geöffneten Zustand mit Rohgummi befüllt, der sich beim Schließen der Form im Formraum 8 verteilt und diesen ausfüllt.

Zum Füllen des Formraums 8 finden zweckmäßig quer zur Längsrichtung der Form eingelegte Abschnitte eines extrudierten Rohgrummiprofils bzw. einer gewickelten Rohgummibahn Verwendung. Vorteilhaft kann das in den Formraum 8 eingelegte Material in einem Ofen auf ca. 80°C vorgewärmt werden. Die Füllung des Formraums 8 erfolgt in günstiger Weise mit leichtem Volumenüberschuss, so dass sich eine zuverlässige blasenfreie Füllung ergibt. Das überschüssige Material kann über eine Öffnung des Formraums 8 entweichen. Dieser ist, wie in Figur 2 angedeutet ist, in Längsrichtung gesehen nur an einem Ende der Form geschlossen und am gegenüberliegenden Ende offen. Zum Vulkanisieren des bei geschlossener Form im Formraum 8 eingeschlossenen Rohgummis sind das Unterteil 6 und/oder Oberteil 7 beheizbar, wie durch Heizleitungen 9 angedeutet ist.

Der Laufstreifen 3, der einteilig um den ganzen Umfang der Karkasse 2 herumreicht, wird, wie in Figur 2 weiter angedeutet ist, Stück für Stück hergestellt. Die Länge des Formraums 3 entspricht dementsprechend einem bestimmten Winkelsegment, z.B. einem ca. 45°-Segment. Zur Herstellung des über 360° umlaufenden Laufstreifens 3 sind daher mehrere, beim genannten Beispiel acht Formvorgänge erforderlich.

Dabei wird so vorgegangen, dass die auf das beim ersten Formvorgang hergestellte Stück 3a folgenden Stücke 3b mit ihrem vorderen Ende an das zugewandte hintere Ende des jeweils vorhergehenden Stücks direkt anvulkanisiert werden. Dabei ragt der hintere Endbereich E des jeweils vorhergehenden Stücks über das offene Ende des Formraums 8 in diesen hinein, wie aus Figur 2 ersichtlich ist. Dieser hintere Endbereich E bleibt bei der Herstellung des betreffenden Stücks unvulkanisiert. Die Teile der Presse sind dementsprechend im Bereich des dem geschlossenen Ende des Formraums 8 benachbarten Bereich E' unbeheizt, wie in Figur 2 dadurch angedeutet ist, dass im Bereich E' keine Heizleitungen 9 vorhanden sind. Nach der Vulkanisation des letzten Stücks des Laufstreifens 3 wird der unvulkanisierte Endbereich E dieses Stücks abgetrennt. Die Länge der Stücke 3a, b ist so berechnet, dass sich abzüglich des abgetrennten Stücks eine dem Umfang der Karkasse 2 entsprechende Länge ergibt.

Die Umfangsfläche der Karkasse 2 ist, wie aus Figur 1 erkennbar ist, in Umfangsrichtung und in Achsrichtung gekrümmt. Diese Fläche entspricht dementsprechend einer geometrischen Torus-Form. Die Bindegummischicht 4 besitzt auf ihrer ganzen Fläche im Wesentlichen dieselbe Dicke, so dass auch die Außenfläche der Bindegummischicht 4, auf welche der Laufstreifen 3 aufgelegt wird, einer geometrischen Torus-Form entspricht. Um innere Spannungen innerhalb des aufgelegten Laufstreifens 3 zu vermeiden, besitzt dieser von Anfang an eine in Umfangsrichtung und Achsrichtung gekrümmte, an die Außenkontur der Karkasse 2 bzw. genauer gesagt an die Außenkontur der mit der Bindegummischicht 4 belegten Karkasse 2 angepasste Innenkontur. Zweckmäßig ist Konturidentität vorgesehen. In jedem Fall soll eine weitgehende, mindestens etwa 80%ige Anpassung vorhanden sein, wobei die Abweichungen eher zu größeren Radien gehen können als umgekehrt. Die Anpassung der Laufstreifen-Innenkontur an die Karkassen-Außenkontur ergibt einen exakten Sitz nach Art einer Kappe auf dem Kopf ihres Trägers.

Der Laufstreifen 3 wird dementsprechend als an lediglich einer Umfangsstelle offener Torus mit einer an die Außenkontur der Karkasse 2 angepassten Innenkontur 10 hergestellt. Zweckmäßig entspricht die Außenkontur 11 des Laufstreifens 3 der Außenkontur eines entsprechenden Neureifens.

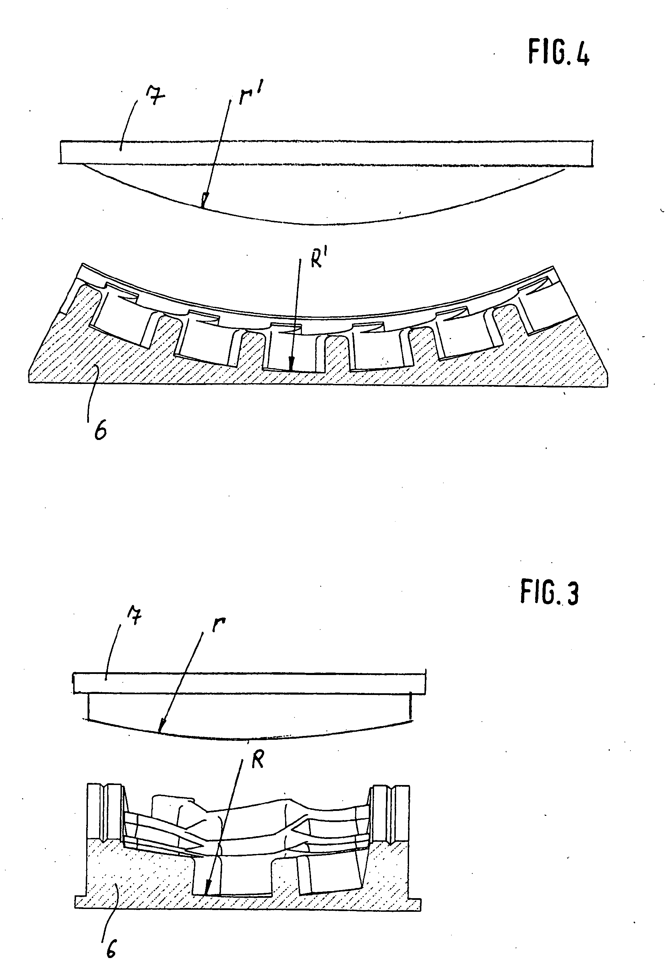

Die im Bereich von Unterteil 6 und Oberteil 7 vorhandenen, radial äußeren bzw. inneren Begrenzungen des Formraums 8 sind daher über der Breite und Länge der Form entsprechend gekrümmt, wie durch die in den Figuren 3 und 4 eingezeichneten Radius r, R bzw. r', R' angedeutet ist. Die karkassenseitige Oberfläche des Laufstreifens 3 wird im dargestellten Beispiel mit dem Oberteil 7 der Presse 5 hergestellt. Die profilierte, umfangsseitige Oberfläche des Laufstreifens 7 wird im dargestellten Beispiel mit dem Unterteil 6 der Presse 5 hergestellt.

Der in Figur 3 angegebene Radius r der Krümmung der dem Formraum 8 zugeordneten Oberfläche des Oberteil 7 über der Breite der Form entspricht der Krümmung der Umfangsfläche der Karkasse 2 über der Breite, das heißt in Achsrichtung. Der in Figur 4 angegebene Radius r' der Krümmung der dem Formraum 8 zugeordneten Oberfläche des Oberteils 7 über der Länge der Form entspricht dem zugeordneten Radius der in Umfangsrichtung umlaufenden Umfangsfläche der Karkasse 2. Infolge der Krümmung über der Breite der Form nimmt der Radius r' über der Breite der Form von der Mitte ausgehend nach beiden Seiten ab.

Der in Figur 3 eingezeichnete Radius R der Kopffläche der im Unterteil 6 vorgesehenen Profilform über der Breite der Form, das hießt in Achsrichtung, entspricht der Krümmung der Profil-Außenfläche eines Neureifens, dessen Profilierung bei der Runderneuerung verwirklicht wurde, über der Breite des Reifens, das heißt in Achsrichtung. Der in Figur 4 angegebene Radius R' der Kopffläche der in das Unterteil 6 eingearbeiteten Profilform über der Länge der Form entspricht dem Radius der umlaufenden Umfangsfläche des genannten Neureifens, wobei dieser Radius, von der Mitte der Form ausgehend nach beiden Seiten abnimmt.

Der in oben beschriebener Weise hergestellte Laufstreifens 3 wird auf die vorher mit der dünnen Bindegummischicht 4 versehene Umfangsfläche der Karkasse 2 aufgewickelt. Um dies zu erleichtern wird der Laufstreifen 3 möglichst biegeschlaff hergestellt. Beim Belegen der Karkasse 2 mit dem Laufstreifen 3 wird dieser, wie in Figur 1 angedeutet ist, mittels einer Walze 12 an die Karkasse 2 angedrückt. Die Walze 12 ist zweckmäßig so ausgebildet, dass sie über der ganzen Breite des Laufstreifens 3 an diesem anliegt und den Laufstreifen dementsprechend auf seiner ganzen Breite an die ihn aufnehmende Unterlage andrückt. Die Walze 12 besitzt dementsprechend eine konkave Querschnittsform, welche das Negativ der konvexen Querschnittsform der Außenseite des Laufstreifens 3 darstellt, das heißt die Außenkontur der Walze 2 ist entsprechend der Krümmung der Außenkontur des Laufstreifens 3 über der Breite, also mit dem Radius r konkav gekrümmt.

Zur Bildung der Bindegummischicht 4 kann ein von einer Spule abwickelbares Rohgummi-Band Verwendung finden, das ein- oder mehrlagig auf die Umfangsfläche der Karkasse 2 aufgewickelt wird. Die einander zugewandten Enden des hierauf aufgebrachten, einteiligen, als an lediglich einer Stelle offener Torus ausgebildeten Laufstreifens 3 werden mittels wenigstens einer Klammer vorzugsweise mittels mehrerer gleichmäßig über die Breite verteilter Klammern fixiert. Vorher oder nachher wird die Stoßfuge zwischen den einander zugewandten Enden des Laufstreifens 3 durch eine Rohgummifüllung geschlossen. Es kann aber auch so vorgegangen werden, dass der unvulkanisierte Endbereich E des letzten Stück 3b erst nach dem Aufwickeln des Laufstreifens 3 so abgetrennt wird, dass das hierdurch gebildete Ende am gegenüberliegenden Ende des Laufstreifens 3 anliegt und eine zusätzliche Stoßfugenfüllung entfällt.

Während des Aufbringens des Laufstreifens 3 kann die Karkasse 2 auf einem hier nicht näher dargestellten, nabenartigen Träger aufgenommen und vorzugsweise mit einem in den Hohlraum eingebrachten, aufpumpbaren Schlauch versehen sein.

Die Befestigung des Laufstreifens 3 auf der Karkasse 2 erfolgt durch Vulkanisation des die Bindegummischicht 4 und die vorher erwähnte Stoßfugenfüllung etc. bildenden Rohgummis in einem Autoklaven bei einer Temperatur von 100°C bis 120°C, vorzugsweise 110°C und einem Druck von 5 bis 7 bar, vorzugsweise 6 bar. Hierzu kann die mit dem Laufstreifen 3 belegte Karkasse 2 in einen evakuierbaren Andrückschlauch (Enveloppe) eingepackt werden, der sich im evakuierten Zustand stramm an die Unterlage anlegt und dabei den Laufstreifen 3 in Position hält und an die Karkasse 2 andrückt. Das Vakuum innerhalb des Andrückschlauchs wird auch während der Behandlungszeit im Autoklaven aufrechterhalten.

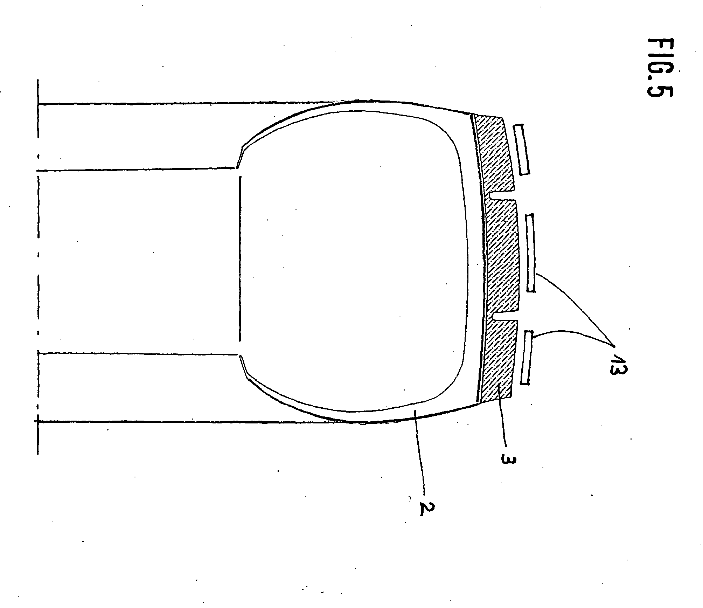

Zusätzlich oder alternativ zum Andrückschlauch können auch in Figur 5 angedeutete, umfangsseitig umlaufende Spannringe bzw. - gurte 13 verwendet werden. Der Figur 5 liegt dabei die Alternative ohne Andrückschlauch zugrunde, d.h. es sind nur Spannringe bzw. -gurte vorgesehen. Dabei wird der einem hohen Verschleiß ausgesetzte Andrückschlauch eingespart und dennoch ein guter, blasenfreier Sitz des Laufstreifens erreicht. Die Beheizung des Laufstreifens erfolgt dabei direkt, d.h. nicht durch einen Andrückschlauch hindurch.

Da EM-Reifen in der Regel auch an den Seitenflächen stark beansprucht sind, werden bei einer Runderneuerung vorteilhaft nicht nur die Umfangsfläche, sondern auch die Seitenflächen runderneuert. Hierzu kann im Bereich jeder Seitenfläche, die runderneuert wird, eine einen neuen Seitenbelag haltende Schablone Verwendung finden, die zusammen mit dem Laufstreifen 3 an die Karkasse angedrückt wird. Dabei findet zweckmäßig ein Andrückschlauch oben erwähnter Art Verwendung, in den die Karkasse samt aufgelegtem Laufstreifen und angelegter Schablone bzw. bei der Erneuerung beider Seitenflächen samt angelegter beider Schablonen und angebrachten Rohgummi-Seitenwandstreifen eingepackt werden. Denkbar wäre es auch hier zur Unterstützung des Andrückschlauchs zusätzlich umfangsseitig umlaufende, innerhalb oder außerhalb des Andrückschlauchs angeordnete Spannringe bzw. -gurte vorzusehen. Bei der Runderneuerung der Seitenflächen werden natürlich die alten Seitenbeläge entfernt, bevor ein neuer Seitenbelag aufgelegt wird.

## Patentansprüche

1. Verfahren zur Runderneuerung von EM-Reifen, wobei ein alter Laufbelag entfernt und auf die so vorbereitete Karkasse (2) ein neuer Laufbelag in Form eines vorgefertigten, einteiligen Laufstreifens (3) aufvulkanisiert wird, der Stück für Stück in einer ein derartiges Stück enthaltenden, aus Unterteil (6) und Oberteil (7) bestehenden Form hergestellt wird, wobei die auf das erste Stück folgenden Stücke an das jeweils vorhergehende Stück direkt anvulkanisiert werden, **dadurch gekennzeichnet, dass** zur Herstellung des Laufstreifens (3) eine Form mit einem einem Stück des Stück für Stück hergestellten Laufstreifens (3) entsprechenden, über der Breite und über der Länge so gekrümmten Hohlraum Verwendung findet, dass der Laufstreifen (3) als an lediglich einer Stelle offener Torus mit in Umfangsrichtung und Achsrichtung gekrümmter, an die Außenkontur der Karkasse (2) angepasster Innenkontur hergestellt wird und dass der so hergestellte Laufstreifen (3) unter Zwischenschaltung einer auf ihrer ganzen Fläche eine im Wesentlichen gleiche Dicke aufweisenden Bindegummischicht (4) direkt auf die schulteraufbaufrei bleibende Karkasse (2) aufgebracht wird.

2. Verfahren nach Anspruch 1, **dadurch gekennzeichnet, dass** der Laufstreifen (3) mit einer der Außenkontur eines Neureifens entsprechender Außenkontur hergestellt wird.

3. Verfahren nach einem der vorhergehenden Ansprüche, **dadurch gekennzeichnet, dass** der Laufstreifen (3) biegeschlaff hergestellt wird.

4. Verfahren nach einem der vorhergehenden Ansprüche, **dadurch gekennzeichnet, dass** die auf das erste Stück (3a) folgenden Stücke (3b) des Stück für Stück hergestellten Laufstreifens an das jeweils vorhergehende Stück direkt anvulkanisiert werden, wobei das jeweils vorhergehende Stück mit einem rückwärtigen Bereich (E) in die Form hineinragt, wobei vorzugsweise der hintere Bereich (E) jedes Stücks (3a, b) bei der Herstellung des zugeordneten Stücks (3a, b) unvulkanisiert bleibt und erst mit der Herstellung des hieran anschließenden Stücks mit diesem vulkanisiert wird und der hintere Bereich (E) des letzten Stücks vor oder vorzugsweise nach dem Auflegen des Laufstreifens (3) auf die Karkasse (2) abgetrennt wird.

5. Verfahren nach einem der vorhergehenden Ansprüche, **dadurch gekennzeichnet, dass** die beim Aufbringen des Laufstreifens (3) auf die Karkasse (2) sich ergebende, eine Stoßstelle mit Rohgummi geschlossen wird und dass die einander zugewandten Enden des aufgebrachten Laufstreifens (3) mittels wenigstens einer Klammer aneinander fixiert werden.

6. Verfahren nach einem der vorhergehenden Ansprüche, **dadurch gekennzeichnet, dass** der Laufstreifen (3) auf die Karkasse (2) aufgewickelt und mittels einer eine konkave, mit dem Radius ® der Krümmung der endgültigen Außenkontur des Laufstreifens (3) über der Breite konkav gekrümmte Außenkontur aufweisenden Walze (12) an die Karkasse (2) angedrückt wird.

7. Verfahren nach einem der vorhergehenden Ansprüche, **dadurch gekennzeichnet, dass** der Laufstreifen (3) zur Vulkanisation in einem Autoklaven zumindest mittels umlaufender Spannringe oder -gurte (13) an die Karkasse (2) angepresst wird.

8. Verfahren nach einem der vorhergehenden Ansprüche, **dadurch gekennzeichnet, dass** gleichzeitig mit der umfangsseitigen Runderneuerung auch im Bereich wenigstens einer Seitenfläche ein neuer Seitenbelag aufgebracht wird, wobei die Karkasse (2) samt Laufstreifen (3) und Seitenbelag mit zugeordneter Schablone in einen evakuierbaren Anpressschlauch eingepackt wird.

9. Laufstreifen zur umfangsseitigen Runderneuerung von EM-Reifen, **dadurch gekennzeichnet, dass** er als an lediglich einer Stelle offener Torus mit in Umfangsrichtung und Achsrichtung gekrümmter, an die Außenkontur einer zugeordneten Karkasse (2) angepasster Innenkontur ausgebildet ist, wobei vorzugsweise die Außenkontur des Laufstreifens (3) an die Außenkontur eines Neureifens angepasst ist und der Laufstreifen (3) als biegeschlaffer Vulkanisationsformling ausgebildet ist.

10. EM-Reifen mit einer zumindest umfangsseitig rundemeuerten Karkasse (2)
**dadurch gekennzeichnet, dass** die Karkasse (2) schulteraufbaufrei ist und dass der runderneuerte Laufstreifen (3) mit seiner Innenseite an der in Umfangsrichtung und Achsrichtung gekrümmten Außenfläche der Karkasse (2) anliegt und dass die Außenkontur des rundemeuerten Laufstreifens (3) vorzugsweise der Außenkontur eines Neureifens entspricht.

## Claims

1. A method for retreading EM tyres, with an old tread being removed and a new tread in the form of a prefabricated, one-piece run strip (3) being vulcanised on a thus prepared carcass (2), such run strip being manufactured section by section in a mould containing such a section and comprising a lower part (6) and an upper part (7), with those sections following the first section being directly vulcanised on each preceding section, **characterised in that** a mould for manufacturing the run strip (3) is used comprising a hollow space which corresponds to one section of the run strip (3) manufactured section by section, and which is curved over the width and the length in such a manner that the run strip (3) is manufactured as a torus open at only one point and having an inner contour which is curved in a circumferential and an axial direction and adapted to the outer contour of the carcass (2), and that the run strip (3) thus manufactured is applied directly to the carcass (2), free of a shoulder build-up structure, by means of interposing a bonding rubber layer (4) of essentially uniform thickness throughout its entire surface.

2. A method in accordance with claim 1, **characterised in that** the run strip (3) is manufactured with an outer contour which corresponds to the outer contour of a new tyre.

3. A method in accordance with any of the preceding claims, **characterised in that** the run strip (3) is manufactured as an element having a bending-flexible consistency.

4. A method in accordance with any of the preceding claims, **characterised in that** the sections (3b) following the first section (3a) of the run strip manufactured section by section are vulcanised directly on each preceding section, with each preceding section projecting into the mould with its rear part (E), with preferably the rear part (E) of each section (3a, b) remaining unvulcanised when the associated section (3a, b) is manufactured, but is only vulcanised with the manufacture of the next section, and that the rear part (E) of the last section is cut off before or preferably after the run strip (3) has been placed on the carcass (2).

5. A method in accordance with any of the preceding claims, **characterised in that** the one abutment point formed when the run strip (3) is applied to the carcass (2) is closed by crude rubber, and that the ends of the applied run strip (3) facing each other are fixed to each other by at least one clip.

6. A method in accordance with any of the preceding claims, **characterised in that** the run strip (3) is wound onto the carcass (2) and pressed against the carcass (2) by means of a roller having across the width thereof a concave contour with the radius of the curvature of the final outer contour of the run strip (3).

7. A method in accordance with any of the preceding claims, **characterised in that** the run strip (3) for the purpose of vulcanisation in an autoclave is pressed against the carcass (2) at least by circumferential tensioning rings or belts (13).

8. A method in accordance with any of the preceding claims, **characterised in that** simultaneously with circumferential retreading a new side tread is applied in the area of at least one lateral surface, with the carcass (2) together with the run strip (3), the side tread and an associated template being enveloped in an evacuable press-on tube (envelop).

9. A run strip for the circumferential retreading of EM tyres, **characterised in that** it is designed as a torus open at only one point and having an inner contour which is curved in a circumferential and an axial direction and adapted to the outer contour of an associated carcass (2), with preferably the outer contour of the run strip (3) being adapted to the outer contour of a new tyre, and the run strip (3) being designed as a bending-flexible vulcanisation moulding.

10. An EM tyre comprising an at least circumferentially retreaded carcass (2) **characterised in that** the said carcass (2) is free of a shoulder build-up structure and that the retreaded run strip (3) with its inner side contacts the carcass (2), which is curved in a circumferential and an axial direction, and that the outer contour of the retreaded run strip (3) preferably corresponds to the outer contour of a new tyre.

## Revendications

1. Procédé de rechapage de pneus EM, dans lequel un revêtement de roulement usé est éliminé et sur la carcasse ainsi préparée (2) est appliqué par vulcanisation un nouveau revêtement de roulement sous forme d'une bande de roulement en une pièce (3) préfabriquée qui est réalisée tronçon par tronçon dans un moule contenant un tel tronçon et constitué par une partie inférieure (6) et une partie supérieure (7), les tronçons qui suivent le premier tronçon étant directement joints par vulcanisation au tronçon respectivement précédent, **caractérisé par le fait que**, pour fabriquer ladite bande de roulement (3), on met en oeuvre un moule présentant une cavité qui correspond à un tronçon de la bande de roulement (3) réalisée tronçon par tronçon et qui est courbée sur la largeur et sur la longueur de telle sorte que ladite bande de roulement (3) est réalisée en tant que tore qui est ouvert sur un seul point et qui présente un contour intérieur courbé dans les directions circonférentielle et axiale et adapté au contour extérieur de la carcasse (2), et que la bande de roulement (3) ainsi réalisée est appliquée, en intercalant une couche de caoutchouc adhésif (4) ayant une épaisseur pour l'essentiel égale sur l'ensemble de sa surface, directement sur la carcasse (2) qui reste exempte de construction en épaule.

2. Procédé selon la revendication 1, **caractérisé par le fait que** ladite bande de roulement (3) est réalisée avec un contour extérieur correspondant au contour extérieur d'un pneu neuf.

3. Procédé selon l'une quelconque des revendications précédentes, **caractérisé par le fait que** ladite bande de roulement (3) est réalisée de manière à être souple en flexion.

4. Procédé selon l'une quelconque des revendications précédentes, **caractérisé par le fait que** les tronçons (3b) de ladite bande de roulement réalisée tronçon par tronçon qui suivent le premier tronçon (3a) sont directement joints par vulcanisation au tronçon respectivement précédent, le tronçon respectivement précédent s'étendant avec une zone arrière (E) dans ledit moule, de préférence ladite zone arrière (E) de chaque tronçon (3a, b) restant non vulcanisée lors de la fabrication du tronçon associé (3a, b) et n'étant vulcanisée que lors de la réalisation du tronçon suivant, conjointement avec ce dernier, et ladite zone arrière (E) du dernier tronçon étant séparée avant ou de préférence après avoir appliqué ladite bande de roulement (3) sur la carcasse (2).

5. Procédé selon l'une quelconque des revendications précédentes, **caractérisé par le fait que** ledit un joint qui résulte lors de l'application de ladite bande de roulement (3) sur la carcasse (2) est fermé de caoutchouc brut et que les extrémités montrant l'une vers l'autre de ladite bande de roulement (3) appliquée sont fixées l'une sur l'autre au moyen d'au moins une agrafe.

6. Procédé selon l'une quelconque des revendications précédentes, **caractérisé par le fait que** ladite bande de roulement (3) est enroulée sur la carcasse (2) et est plaquée contre la carcasse (2) par le biais d'un cylindre (12) qui présente un contour extérieur concave courbé de manière concave avec le rayon (r) de la courbure du contour extérieur définitif de la bande de roulement (3) sur la largeur.

7. Procédé selon l'une quelconque des revendications précédentes, **caractérisé par le fait que**, pour la vulcanisation dans un autoclave, ladite bande de roulement (3) est pressée au moins par le biais d'anneaux ou courroies de serrage périphériques (13) contre la carcasse (2).

8. Procédé selon l'une quelconque des revendications précédentes, **caractérisé par le fait que**, simultanément avec le rechapage circonférentiel, on procède également à l'application d'un nouveau revêtement latéral au niveau d'au moins une face latérale, ladite carcasse (2) y compris la bande de roulement (3) et le revêtement latéral avec le gabarit associé étant enveloppée dans un tuyau flexible de serrage dans lequel peut être réalisé le vide.

9. Bande de roulement pour le rechapage circonférentiel de pneus EM, **caractérisée par le fait qu'**elle est réalisée en tant que tore qui est ouvert sur un seul point et qui présente un contour intérieur courbé dans les directions circonférentielle et axiale et adapté au contour extérieur d'une carcasse associée (2), de préférence le contour extérieur de la bande de roulement (3) étant adapté au contour extérieur d'un pneu neuf, et ladite bande de roulement (3) étant réalisée comme pièce moulée de vulcanisation qui est souple en flexion.

10. Pneu EM ayant une carcasse (2) rechapée au moins sur la circonférence, **caractérisé par le fait que** ladite carcasse (2) est exempte de construction en épaule et que la bande de roulement (3) rechapée s'applique par sa face intérieure sur la face
extérieure de la carcasse (2), qui est courbée dans les direction circonférentielle et axiale, et que le contour extérieur de la bande de roulement (3) rechapée correspond de préférence au contour extérieur d'un pneu neuf.
